# EUROPEAN PATENT APPLICATION

(11) **EP 2 525 483 A1**
(43) Date of publication of application: **21.11.2012**
(21) Application number: 11382154.0
(22) Date of filing: 17.05.2011
(51) Int. Cl.: H02M 7/483

(54) **Modular converter with energy storage capability**

(71) Applicant: Ingeteam Technology S.A., 48170 Zamudio (ES)
(72) Inventor: Atutxa Lekue, Iñigo, 48170 ZAMUDIO (ES); Alvarez Hidalgo, Silverio, 48170 ZAMUDIO (ES)
(74) Representative: Igartua, Ismael

(57) **Abstract**

Modular converter with energy storage capability comprising one or more phases, wherein each phase comprises a plurality of modules (2) connected in series, each one of said modules (2) having a H-bridge topology (3) connected in parallel to a capacitor (4) and said module (2) comprising a energy storage system (5), wherein the energy storage system (5) and the H-bridge (3) of each module (2) are connected by means of a DC-DC converter device (6), thereby enabling the H-bridge (3) to operate at a constant voltage regardless of the voltage of the energy storage system (5).

## Description

### TECHNICAL FIELD

This invention relates to static conversion technologies for converting electric power between an alternating current (AC) and a direct current (DC). In particular this invention relates to a static converter for enabling the control and exchange of power of a high-AC voltage electrical system. The unit comprises a modular converter with DC energy storage capability.

### PRIOR ART

Most high-power electric units generate and distribute AC electric power, normally three-phase power. As the storage of AC electric power is problematic and costly, units usually generate power on a continual basis, as a result of which it is available on demand, which requires complex systems for adjustment and dynamic control of generation. In these conditions, if part of said power is not used, full use is not made of the generation and part of it is even wasted.

Another of the problems involved in AC generation and distribution is the distortions generated by different loads and limitations in the transfer of power from existing lines. These distortions travel through the electric power network and may affect the services connected to it. A typical way of combating said problem of a lack of quality in power distribution is to strengthen the network by building new lines or installing new and larger transformers, etc. Said measures are costly, however, and the delivery times for executing them lengthy, and an effective and alternative way of improving the quality of electric power is to install specially developed units in the vicinity of the source of the distortions, units known as flexible AC transmission systems (FACTS).

Among FACTS systems are various control units, one of them being the reactive power static compensator (STATCOM). A STATCOM comprises a DC/AC voltage source converter (VSC) that has an AC side connected to the AC network (for example, the transmission network) by means of a filter in each phase, and a DC side that is connected to a temporary electric energy storage means such as a capacitor. The most widely used traditional VSC conversion topology is the bi-level one, in which the output of each phase is connected either to the positive pole or to the negative pole of the capacitor by means of the transition between the turn-on and turn-off states of the power semiconductors, thus producing two possible output voltage combinations for each phase on the AC side. Thus, in this type of voltage converter, the magnitude, frequency and phase of the voltage on the AC side is reconstructed and controlled from the DC voltage and the switching pattern applied to the gate control switching-on and switching-off power semiconductors.

Among the gate control switching-on and switching-off semiconductors, the insulated-gate bipolar transistor (IGBT) is one of the most widely used due to its easy gate control, its rapid switching and low losses. In addition, the low power consumption requirement and the dynamic influence on the switching characteristics of the gate control semiconductor make the IGBT the preferred semiconductor in the application of techniques for the serialisation of various components. This enables an increase in the calibre of the voltage of the equivalent semiconductor (various components in series) and therefore the handling of higher voltages and the provision of converters with higher power levels. However, there are other semiconductor devices (thyristors, IGCTs, etc) that may also be applied in high-power and high-voltage converters.

By applying the STATCOM operating philosophy and using high-frequency switching semiconductors such as IGBTs, compact units offering the dynamic compensation of reactive power may be obtained, which allows the quality of the electricity supply to be improved in the industry and enables its distribution at an affordable cost.

Up until now the STATCOM described herein only compensates reactive power. However, it is also possible to compensate real power by connecting a energy storage system to said STATCOM. Said unit is used to hold system reserve and/or to compensate levels of energy fluctuating in the network.

In high-power applications (tens of MVA) and high-voltage applications (tens and hundreds of kV), and in using a bi-level converter, it is necessary to connect a large number of batteries in series to reach the DC-voltage level required by the VSC. In addition, in order to obtain the required real power and a long-life energy storage unit, the batteries must also be in parallel. This involves inherent problems with regard to the balancing of the current and the voltage in the batteries positioned in series/parallel, though it may also cause problems with the converter, as the improper adjustment of the voltage on the DC capacitor, high and destructive currents in the event of a short-circuit, and even a battery in the process of failing may cause the total destruction of the storage unit.

The prior art is evolving and there is an alternative to the connection in series of power semiconductors for achieving the necessary voltage for high-power and high-voltage applications. These new techniques involve altering the VSC topology, using topologies in which cells or low-voltage VSC converter modules are linked in series. An arrangement of this type is the chain-link of converter modules, in which a certain number of converters are connected to form a simple phase of the tri-phase system, as shown in GB2294821. As a result, each phase of a chain-link VSC converter comprises a number of modules connected in series. Each module VSC comprises four gate control switching-on and switching-off semiconductors, for example four IGBTs, with their respective anti-parallel diodes connected in an H-bridge, where the DC side has its own DC capacitor with independent storage. Each phase of the VSC chain-link comprises a number of modules in chain-link, proportional to the AC voltage of the system, said phases being capable of being in a Y-connection or in a delta-connection to said phases. The replacement of the capacitors in each module with a battery or another energy storage system is also known in the prior art and gives the unit the capability to supply real power to the AC system.

Specifically, W02010102667 describes an enhanced VSC modular converter that is capable of dynamically supplying real power, and of providing a newly constructed component for the modular VSC, based on chain-link technology in order to enhance the flexibility of the VSC. Said VSC comprises one or more phases, each of which comprise converter modules connected in series to each other, and a separate energy source is added to at least one of the converter modules in each phase.

This solution also relates to a energy source unit comprising at least one energy source to convert modules of a VSC comprising one or more phases. The energy source unit comprises a separate housing for accommodating at least the energy source.

This VSC modular converter with energy sources is used to control voltage in the network, by the absorption or injection of reactive and real power from or towards the network.

### DISCLOSURE OF THE INVENTION

It is an object of this invention to provide a modular converter as defined in the claims.

This modular converter with energy storage capability comprises one or more phases, and each of said phases comprises a plurality of modules connected in series. Each one of said modules has a H-bridge topology connected in parallel to a capacitor and comprises a energy storage system. The energy storage system and the H-bridge of each module are connected by means of a DC-DC converter device, enabling the H-bridge to operate at a constant voltage regardless of the voltage of the energy storage system.

From a practical point of view, it may appear that the inclusion of a DC-DC converter device between the capacitor and the energy storage system increases the complexity and the total number of elements in comparison to connecting the energy storage unit directly in parallel with the capacitor. However, when the energy storage system is connected directly to the converter it should be pointed out that the DC voltage that supplies the H-bridge is equal to the voltage of the energy storage unit, and as the AC voltage that each H-bridge may generate is proportional to its DC voltage, in the case of a direct connection of the energy storage unit to the capacitor, the AC voltage that each H-bridge generates is thus proportional to the voltage of the energy storage unit.

The preferred energy storage unit of the invention is the battery. The operating voltage ranges of modern batteries are very broad, these being capable of operating in many cases at between 50% and 100% of their maximum voltage. In standard operating conditions the STATCOM is connected to a network, as a result of which it must be capable of generating enough AC voltage to control the exchange of power with the network. As a consequence, for a system with batteries connected directly in parallel with the capacitor, in order to maintain control across the entire voltage of the batteries the number of modules connected in series must be calculated for the lowest DC voltage level in the H-bridges. However, with the inclusion of the DC-DC converter device between the capacitor and the energy storage system, the H-bridge may operate with the nominal DC voltage, regardless of the voltage in the energy storage system. This means that in order to achieve the required AC voltage, the number of modules necessary is reduced significantly.

As a result, by means of the inclusion of a DC-DC converter device in the module, the converter is simplified as a unit thanks to the reduction of the total number of modules required to form the converter. In addition, due to the fact that the DC-DC converter device may be formed with one phase whereas the H-bridge requires at least two, in those cases where the operating range of the energy storage unit is sufficiently broad, the total number of semiconductors is also significantly reduced.

These and other advantages and characteristics of the invention will be made evident in the light of the drawings and the detailed description thereof.

### DESCRIPTION OF THE DRAWINGS

Figure 1 schematically shows a diagram of the circuit of an embodiment of an inventive modular converter in a Y-connection.
Figure 2 schematically shows a diagram of the circuit of an embodiment of the module for the formation of a modular converter of Figure 1.
Figure 3 schematically shows a diagram of the circuit of a bi-level phase of the DC-DC converter device and the H-bridge of the module of Figure 2.
Figure 4 schematically shows a diagram of the circuit of a 3L-NPC tri-level phase of the DC-DC converter device and the H-bridge of another embodiment of the module of Figure 2.
Figure 5 schematically shows a diagram of the circuit of a 3L-FC tri-level phase of the DC-DC converter device and the H-bridge of another embodiment of the module of Figure 2.
Figure 6 schematically shows a diagram of the circuit of a buck DC-DC converter device represented in a generic manner.

### DETAILED DISCLOSURE OF THE INVENTION

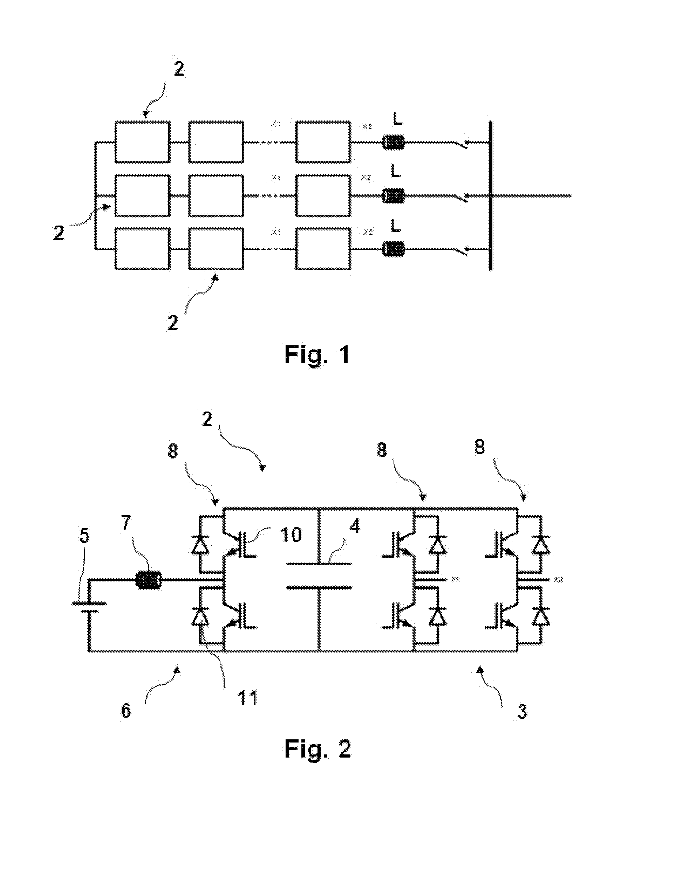

Figure 1 shows the modular converter of the invention in accordance with an example embodiment. In it are disposed three modular converters in a three phase network, P1, P2, P3, wherein each modular converter is a line connected to a phase by means of a filter, in this embodiment an L, and an AC circuit protector switch. In this example said phases are in a Y-connection, but it is also possible for them to be in a delta-connection and even to use them as isolated phases connected to three single-phase transformers.

Each module 2 of the modular converter is represented by means of a box, said converter modules 2 of a modular converter of each line connected to a phase being connected in series. An arrangement of this type is the so-called chain-link, which is already known in the prior art. A chain-link converter comprises a number of modules connected in series that have a topology known as cascaded H-bridge and each one comprises four semiconductors, for example four IGBTs with anti-parallel diodes connected in an H-bridge and a DC capacitor as a energy storage connected to the H-bridge. Also known in the prior art is the replacement of the capacitors in each module by a battery or other energy storage system providing unit with the capability to supply or extract available real power to or from the AC system.

Each one of the phases consists of a number of modules 2 connected in a chain, proportional to the AC voltage of the system, as a result of which Figure 1 does not show a certain number of them.

Figure 2 shows a module 2 in an example embodiment. Each module 2 has an H-bridge topology 3 connected in parallel to a capacitor 4 and with said module 2 comprising an energy storage system 5, for example a battery, wherein the battery 5 and the H-bridge 3 are connected by means of a DC-DC converter device 6, enabling the H-bridge 3 to operate at a constant voltage regardless of the voltage of the battery 5.

The inclusion of this DC-DC converter device 6 presents numerous advantages in relation to the known solutions in the prior art regarding the direct connection of the battery to the capacitor of the DC bus of the H-bridge, the replacement of the capacitor by a battery, or the connection of the battery and the H-bridge by means of a chopper-type unit. Some of said advantages are as follows:
1. The capability to operate with DC voltage on permanent basis: due to the significant voltage variation in the existing batteries (50-100%), a direct connection of the battery to the DC bus implies an increase in the number of modules, with the 50-100% implies to double the number of modules, in order to supply the output voltage in nominal operating conditions when the batteries are run down.
As the battery 5 and the H-bridge 3 of each module 2 are connected by means of a DC-DC converter device 6, the H-bridge 3 is capable of operating at a nominal voltage regardless of the voltage of the battery. In also taking into consideration that the configuration of each module of the converter is identical and that the DC-DC converter device 6 that is proposed as the preferred converter may be formed by means of a phase 8 while at least two are required for the H-bridge 3, the total number of phases 8 necessary for the entire modular converter, including the DC-DC converter devices 6, is smaller than the number of phases required for the converter with a direct connection from the battery and the H-bridge, due to the need in this latter case to increase the number of modules to compensate for the variations in voltage of the energy source.
2. Increased system dynamics: the inclusion of the DC-DC converter device 6 increases the dynamics in response to changes in the available power setting, a quicker response from the system thus being obtained. The current of the DC-DC converter device 6 is reversible, which means that the current may flow from and towards the battery 5, as a result of which when it is necessary to consume energy from the network the current flows towards the battery and charges it, whereas when an extra supply of energy to the network is necessary the current originates from the battery.
3. Control of battery ripple current: this advantage is obtained by incorporating a filter
7 in the connection of the battery 5 and the capacitor 4. In constructing a module converter 2 it is important that the inductor on the DC side is as low as possible in order to reduce switching transients, whereas on the AC side the inductor is required to limit the current and filter the waveform of the current. The effect of the filter 7 on the module converter 2 on the DC side translates into a reduction of the current ripple in the battery 5, for the purpose of which, and bearing in mind heating problems caused in the batteries by said ripple, the incorporation of a DC-DC converter device 6 and a filter 7 allows this ripple to be controlled and reduced. The filters may be of various types, and although an L inductor is preferably defined, LC inductor-capacitor filters may also be used, or transformers used as a filter.
An important characteristic of the modular converter described herein is that in each module 2 the DC-DC converter device 6 comprises a branch or phase 8 that is identical to the two branches or phases 8 of the H-bridge 3. This results in a reduction in construction costs as a larger number of equal components are used, with maintenance costs being reduced for the same reason, etc.

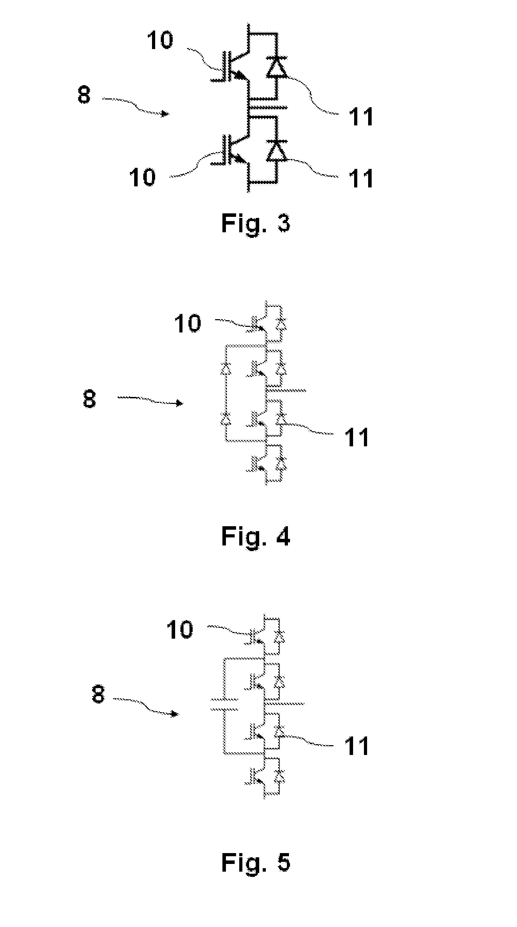

The preferred configuration of said phase 8 is a bi-level branch, which is the simplest configuration and has the capability to set two different voltage levels in its output terminal. As shown in Figure 3, the bi-level branch comprises two gate control switching-on and switching-off semiconductors 10 and with an anti-parallel diode 11 disposed in a series arrangement between the two positive and negative poles of the DC bus. The point of connection between the two semiconductors is in this case the output terminal of the phase. The semiconductor 10 defined in this preferred configuration is an IGBT transistor that has the characteristics of operating at a high switching frequency and at a high voltage. In the configuration, when the current in the module 2 is positive and therefore flows towards the battery 5, the upper IGBT 10 and the lower diode 11 conduct, whereas when the current flows from the battery 5 towards the capacitor 4 the lower IGBT 10 and the upper diode 11 conduct.

Other alternatives for the semiconductor 10 are the IGCT (integrated gate conmutated thyristor), the GTO (gate turn-off thyristor), the MOSFET (metal oxide semiconductor field effect transistor) transistor, or any other type of gate control switching-on and switching-off switching device.

Other possible configurations of the phase 8 are that of a tri-level branch 3L, which has the capability to set three different voltage levels in its output terminal. Some examples of tri-level branches 3L are the 3L-NPC and the 3L-FC, as shown in Figures 4 and 5. As regards the bus capability, the use of a 3L phase 8 necessitates the use of a DC bus with midpoint. Other more complex multi-level configurations with a larger number of levels may also be used.

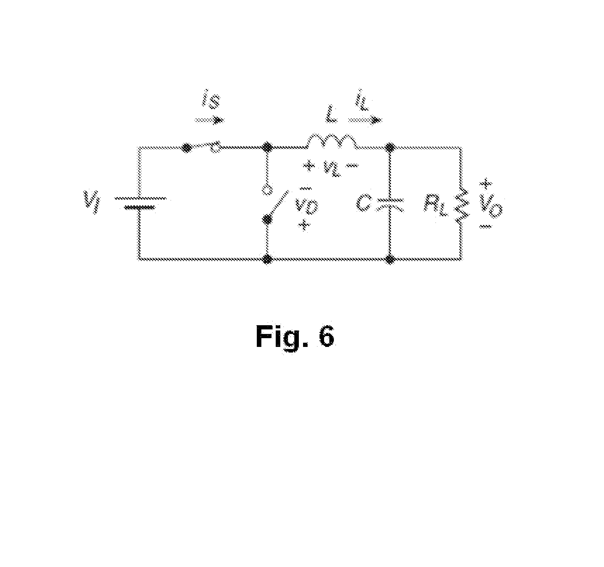

The DC-DC converter device 6 is a characteristic element of this invention, and in a preferred manner the converter device 6 is defined as a buck-type converter (step-down) due to its simplicity and similarity to the phases 8 of the H-bridge 3. A generic buck converter may be seen in Figure 6, wherein the semiconductors are represented as ideal switches: in this case Vi is the input voltage and Vo the output with an LC output filter. In Figure 2 the semiconductors represented above are ideally represented by an IGBT 10 with an anti-parallel diode 11. In this case the input voltage Vi is that of the capacitor 4, whereas the output voltage Vo is that of the battery 5. As a result, and in this embodiment with a DC-DC buck-type converter 6, the voltage of the battery 5 must always be positive and lower than the voltage of the capacitor 4, this being practically and almost continually constant.

It also possible to use another type of DC-DC converter device such as the boost (step-up) or the buck-boost, which is a combination of the previous ones. Another interesting topology is the multiphase buck converter, which involves connecting in parallel at least two buck converter devices. By dephasing the switching between the different branches the ripple in the battery 5 is reduced without increasing the size of the filter 7.

We have already seen that it is also possible to compensate real power as well as reactive power with this modular converter. As a whole all the H-bridges 3 form a converter 1 that enables control of the amplitude and the phase of the current that is injected or absorbed. The injection or absorption of reactive power towards or from the network is performed by imposing a current with a phase difference of 90° in relation to the voltage of the network. If the current is in a leading phase, the converter 1 injects, whereas if it is in a lagging phase it consumes. As the voltage and current are in quadrature, no power transmission is performed, as a result of which, in theory, the voltage in the capacitors 4 remains constant. In practice a small amount of power is consumed due to the losses generated by the converter 1. This power is taken from the network, adapting the phase difference in a minimal manner. As a result, if the network disappeared, it would be impossible to achieve this necessary contribution, with the capacitors 4 discharging as a result.

In addition, in the event that larger power transmissions need to be made, due to the fact that the capacitors have little storage capability, an additional energy storage system is required and which can be achieved by means of the arrangement of batteries 5 connected to the capacitor 4 of the H-bridge 3 through the DC-DC converter device 6, said batteries 5 being those that store or provide that power.

Said energy storage system 5, which is usually a battery, is used to provide system reserve and/or to compensate for the fluctuating power levels in the network. Said battery 5 is preferably a Li-lon battery, although any type of battery may be used or a solar panel system or fuel cells, depending on the required energy storage capability.

The main objective of the inclusion of a DC-DC converter device 6 is to compensate for the difference in voltage between the battery 5 and the capacitor 4. In spite of the fact that there are different ways of achieving this, the inclusion of a DC-DC converter device 6 becomes especially important when transfering to modular converters, as by including the converter device 6 and the battery 5 in the module 2, the insulation of the module 2 is all that is required to achieve a modular and redundant solution. As a result, the battery 5 has the same electrical potential as its corresponding module 2, with the result that it is common to see said battery 5 housed in the same housing as the module 2.

The usual operating ranges of this converter 1 are as follows:
- Output voltage: 1 kV to 36 kV.
- Reactive power: ± 5MVAR up to ± 300 MVAR.
- Energy storage capability: up to 100 MW for 60 minutes.

The arrangement of Figure 1 also includes a control system, control means and switching means (not shown in the figure), which are respectively used to prepare communications in each of the three phases, P1, P2, P3, of the transmission system, to monitor the voltages and currents of each phase, P1, P2, P3, and to switch the semiconductors of each module, and as a whole it is used to monitor the reference of the real and reactive power, which are defined to compensate and support the transmission line effectively. The control system also monitors the load level of the energy storage system 5 and controls the flow of real power to and from the network with the result that the load level of the energy storage system 5 is within the specified limits.

The system described is a STATCOM-type converter 1 with energy storage capability, in which the advantages of STATCOM and energy storage technologies are combined in a single converter in the most efficient and economical manner possible. The main functional aspects of said system are as follows:
- Compensation of reactive power.
- Control of network voltage.
- Injection of reactive power in response to gaps in the network.
- Injection of peaks of real power at highly variable loads.
- Stabilisation of the generation of renewable energies.
- Power generation during blackouts (blackstart capability)
- Control of transients and electromechanical oscillations in the network.

The topology that best adapts to STATCOM converters is the cascaded H-bridge, also known as a chain-link. The advantages of this topology are summarised as follows:
- Modularity. This topology is based on the connection in series of various totally identical H-bridges 3, with the result that by combining the voltage of different bridges the output voltage of the converter 1 may be adjusted based on the selection of the necessary number of bridges. This allows a wide range of converters of different voltages and power levels to be made by means of a single basic module.
- Redundance. It is possible to include a bypass system that enables a module 2 to be short-circuited in the event of it functioning incorrectly. This enables additional modules 2 to be included with the result that the converter 1 continues to operate with various inoperative modules 2 (short-circuited).
- Wave quality. The number of levels of the output voltage increases with the number of modules 2 connected in series. This enables excellent wave quality in the output voltage and current to be obtained, in compliance with stringent network regulations currently in existence and without the inclusion of large and costly filters.
- Efficiency. The capability to adjust the output voltage enables the converter 1 to operate at the maximum voltage possible, reducing the current in the H-bridge 3 and reducing losses as a result. Furthermore, the large number of levels of the output voltage enables a reduction in the switching frequency of the H-bridge 3, thereby reducing switching losses.
- Connection to distribution networks without a transformer. The possibility of incorporating n H-bridges 3 into the system enables standard voltages in medium-voltage distribution networks (up to 36kV approximately) to be achieved in a simple manner, thereby avoiding the need for a connection transformer and reducing the price, size and weight of the solution.

In addition to the aforementioned advantages, this topology enables the incorporation of a storage system 5 for each module 2 installed, resulting in a distributed energy storage capability, thereby giving the storage function the modularity and redundance capability of the STATCOM converter.

## Claims

1. Modular converter with energy storage capability comprising one or more phases, wherein each phase comprises a plurality of modules (2) connected in series, each one of said modules (2) having an H-bridge topology (3) connected in parallel to a capacitor (4) and said module (2) comprising a energy storage system (5), **characterised in that** the energy storage system (5) and the H-bridge (3) of each module (2) are connected by means of a DC-DC converter device (6), thereby enabling the H-bridge (3) to operate at a constant voltage regardless of the voltage of the energy storage system (5).

2. Modular converter according to claim 1, wherein the energy storage system (5) and the DC-DC converter device (6) are connected by means of a filter (7).

3. Modular converter according to the preceding claim, wherein the filter (7) is an L inductor.

4. Modular converter according to claim 2, wherein the filter (7) is an L-C inductor-capacitor.

5. Modular converter according to claim 2, wherein the filter (7) is a transformer.

6. Modular converter according to any of the preceding claims, wherein the DC-DC converter device (6) and the H-bridge (3) comprise phases (8) with the same configuration.

7. Modular converter according to the preceding claim, wherein the DC-DC converter device (6) comprises a bi-level phase (8), and the H-bridge (3) comprises two bi-level phases (8).

8. Modular converter according to claim 6, wherein the DC-DC converter device (6) and the H-bridge (3) comprise one and two phases (8) respectively of the 3L-NPC type, 3L-FC type or another multi-level configuration.

9. Modular converter according to any of claims 6 to 8, wherein each phase (8) comprises a plurality of gate control switching-on and switching-off semiconductors (10), said semiconductor (10) preferably being an IGBT transistor, or also an IGCT transistor, GTO transistor or other switching device.

10. Modular converter according to any of the preceding claims, wherein the DC-DC converter device (6) is preferably of the buck type.

11. Modular converter according to the preceding claim, wherein the DC-DC converter device (6) is of the boost, buck-boost, or multiphase buck type with at least two buck converter devices connected in parallel.

12. Modular converter according to any of the preceding claims, wherein the energy storage system (5) is a Li-lon battery.

13. Modular converter according to any of claims 1 to 11, wherein the energy storage system (5) is any type of battery, a solar panel system, or fuel cells.

14. Arrangement of three modular converter devices in a three phase network, each modular converter (1) according to any of the preceding claims, wherein said modular converter (1) are in a Y-connection, in a delta-connection or are in isolated phases connected to three single-phase transformers.

15. Module (2) for the formation of a modular converter according to any of the preceding claims.
